# EUROPEAN PATENT APPLICATION

(11) **EP 1 508 890 A1**
(43) Date of publication of application: **23.02.2005**
(21) Application number: 02730738.8
(22) Date of filing: 29.05.2002
(51) Int. Cl.: G08G 1/123, H04M 3/42, H04B 7/26, G06F 17/60

(54) **COMMUNICATION SYSTEM**

(71) Applicant: MITSUBISHI DENKI KABUSHIKI KAISHA, Tokyo 100-8310 (JP)
(72) Inventor: MORIMOTO, Hiroyuki, c/o Mitsubishi Denki K. K., Chiyoda-ku, Tokyo 100-8310 (JP)
(74) Representative: Sajda, Wolf E., Dipl.-Phys.
(86) International application number: PCT/JP2002/005185
(87) International publication number: WO 2003/100744

(57) **Abstract**

A taxi user (1) specifies a taxi company or a driver through a browser phone (2), and transmits a car-allocation request message to a wireless local access point (3) by using short-distance wireless communications for which a fee is not charged, the transmitted car-allocation request message is received by a taxi company server (7) via a local portal server (4) etc., in the taxi company server (7), a taxi to be allocated is selected based on the contents of the car-allocation request message and a position of the wireless local access point, the browser phone (2) of the taxi user (1) is notified of the selection result, a car-allocation instruction is transmitted to a local portal server (10) inside-the-car of a selected taxi, and the selected taxi is allocated to the taxi user (1).

## Description

### TECHNICAL FIELD

The present invention relates to a vehicle selection boarding system, and in particular, relates to a taxi selection boarding system.

### BACKGROUND ART

As a conventional art of a taxi boarding system, "Taxi calling system using the Internet mobile terminal" disclosed in the Japanese Unexamined Patent Publication No. JP2001-119 484 can be cited.

According to the "Taxi calling system using the Internet mobile terminal", if a taxi user accesses a website of the Internet aiming at taxi allocation, by using a mobile terminal, the host computer managing the website narrows a taxi user's position by a position information specifying function of the mobile terminal, and automatically transmits the taxi user's position and other information to a wireless station of a taxi or a vacant taxi in the neighborhood of the taxi user.

According to the conventional art, however, the taxi user needs to pay a communication fee since the taxi user has to directly access the website of taxi allocation from the mobile terminal.

Moreover, according to the conventional art, the taxi user is not able to call a taxi with designating a specific taxi company or a specific driver.

Then, it is a main object of the present invention to solve the above problems and to provide a system by which a taxi user can call a taxi with designating a specific taxi company and a specific driver, without paying a communication fee.

### DISCLOSURE OF THE INVENTION

A communications system according to the present invention has a feature that the communications system includes:
a mobile communications terminal apparatus to transmit a car-allocation request message which requests car allocation, by using short-distance wireless communications;
a plurality of relay apparatuses, each of which is located at a predetermined geographical position, to receive the car-allocation request message transmitted from the mobile communications terminal apparatus in a certain case, and to perform relay processing of the car-allocation request message received;
a plurality of car-installed communications apparatuses installed in a plurality of cars; and
a vehicle management apparatus to manage the plurality of cars by performing communications with the plurality of car-installed communications apparatuses, to receive the car-allocation request message relayed by one of the plurality of relay apparatuses, to detect a placed position of the one of the plurality of relay apparatuses, which relayed the car-allocation request message, to select a specific car, as a selected vehicle, from the plurality of cars based on the car-allocation request message and a detected placed position of the relay apparatus, and to transmit a car-allocation instruction message that directs to allocate a car to the detected placed position of the relay apparatus, to a car-installed communications apparatus installed in the selected vehicle.

It is a feature of the communications system that the communications system includes a plurality of vehicle management apparatuses, and the mobile communications terminal apparatus selects a specific vehicle management apparatus from the plurality of vehicle management apparatuses and transmits a car-allocation request message addressed to a selected vehicle management apparatus.

It is a feature of the communications system that the vehicle management apparatus sets driver identification information for identifying a driver of each car in the plurality of cars,
the mobile communications terminal apparatus transmits a car-allocation request message including specific driver identification information, and
the vehicle management apparatus, when receiving the car-allocation request message including the specific driver identification information from one of the relay apparatuses, selects a car corresponding to the driver identification information included in the car-allocation request message as the selected vehicle.

It is a feature of the communications system that the mobile communications terminal transmits the car-allocation request message, by using short-distance wireless communications for which a fee is not charged.

A communications system according to the present invention has a feature that the communications system includes:
a plurality of relay apparatuses, each of which is located at a predetermined geographical position, to receive a car-allocation request message transmitted from a mobile communications terminal apparatus, in a certain case, and to perform relay processing of the car-allocation request message received;
a plurality of car-installed communications apparatuses installed in a plurality of cars; and
a vehicle management apparatus to manage the plurality of cars by performing communications with the plurality of car-installed communications apparatuses, to receive the car-allocation request message relayed by one of the plurality of relay apparatuses, to detect a placed position of the one of the plurality of relay apparatuses which relayed the car-allocation request message, to select a specific car, as a selected vehicle, from the plurality of cars, based on the car-allocation request message and a detected placed position of the relay apparatus, and to transmit a car-allocation instruction message that directs to allocate a car to the detected placed position of the relay apparatus, to a car-installed communications apparatus installed in the selected vehicle.

It is a feature of the communications system that the vehicle management apparatus sets driver identification information for identifying a driver of each car in the plurality of cars, and when receiving a car-allocation request message including specific driver identification information from one of the relay apparatuses, selects a car corresponding to the driver identification information included in the car-allocation request message as the selected vehicle.

It is a feature of the communications system that each of the plurality of car-installed communications apparatuses keeps identification information of a driver of a car in which each of the car-installed communications apparatuses is installed, as its driver identification information, and when the mobile communications terminal apparatus has moved to the car in which each of the car-installed communications apparatuses is installed, transmits its driver identification information to the mobile communications terminal apparatus.

It is a feature of the communications system that each of the car-installed communications apparatuses keeps notice information predetermined, and when the mobile communications terminal apparatus has moved to the car in which each of the car-installed communications apparatuses is installed, transmits the notice information to the mobile communications terminal apparatus.

It is a feature of the communications system that each of the car-installed communications apparatuses keeps advertising information as the notice information, and when the mobile communications terminal apparatus has moved to the car in which each of the car-installed communications apparatuses is installed, transmits the advertising information to the mobile communications terminal apparatus.

It is a feature of the communications system that the vehicle management apparatus keeps user attribute information which shows an attribute of a user of the mobile communications terminal apparatus, and transmits a car-allocation instruction message including the user attribute information to a car-installed communications apparatus installed in the selected vehicle, and
each of the car-installed communications apparatuses keeps a plurality of notice information, and when receiving the car-allocation instruction message including the user attribute information from the vehicle management apparatus, selects at least one of notice information from the plurality of notice information based on the user attribute information, and transmits a selected notice information to the mobile communications terminal.

It is a feature of the communications system that each of the car-installed communications apparatuses, when the mobile communications terminal apparatus has moved to the car in which each of the car-installed communications apparatuses is installed, relays connection of the mobile communications terminal apparatus to the Internet.

It is a feature of the communications system that each of the car-installed communications apparatuses keeps questionnaire data for a questionnaire, and when the mobile communications terminal apparatus has moved to the car in which each of the car-installed communications apparatuses is installed, transmits the questionnaire data to the mobile communications terminal apparatus, receives a response to the questionnaire data from the mobile communications terminal apparatus, and transmits a received response to the questionnaire data to the vehicle management apparatus.

### BRIEF DESCRIPTION OF THE DRAWINGS

Fig. 1 shows an example of a system structure of a taxi selection boarding system;
Fig. 2 shows an example of an internal structure of a taxi company server; and
Fig. 3 shows an example of a vehicle state table.

### BEST MODE FOR CARRYING OUT THE INVENTION

### Embodiment 1

A taxi selection boarding system (communications system) according to Embodiment 1 will be explained hereafter with reference to a figure.

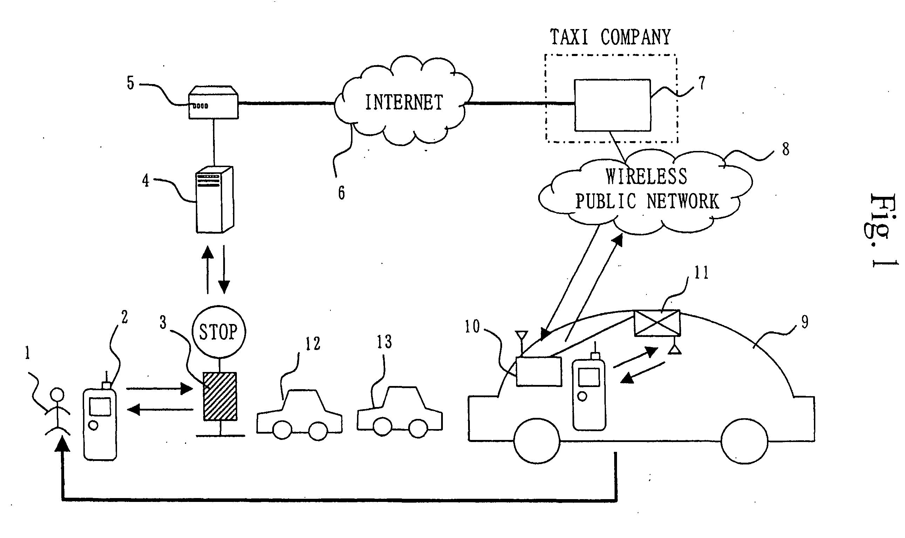

Fig. 1 shows an example of a system structure of a taxi selection boarding system. In Fig. I, 1 denotes a taxi user and 2 denotes a browser phone used by the taxi user. The browser phone 2 is a cellular phone in which a browser is installed. The browser phone 2 can perform not only usual wireless communications using a public wireless network but also short-distance wireless communications, such as Bluetooth and IEEE802.11. The browser phone 2 is an example of a mobile communications terminal apparatus. 3 denotes a wireless local access point which can perform short-distance wireless communications, such as Bluetooth and IEEE802.11. The wireless local access point 3 is an example of a relay apparatus. The wireless local access point 3 is located at a taxi stand in Fig. 1, but it may be located at a place other than the taxi stand. 4 denotes a local portal server which accommodates the wireless local access point 3. 5 denotes a connection apparatus such as an ADSL modem, for connecting the local portal server 4 to the Internet. 6 denotes the Internet. 7 denotes a taxi company server which manages car allocation, in the taxi company. The taxi company server 7 is an example of a vehicle management apparatus. 8 denotes a wireless public network between the taxi company server 7 and a taxi 9. 9 denotes a taxi which is to be called. 10 denotes a local portal server inside-the-car which is installed in a taxi. The local portal server 10 inside-the-car has a wireless communications function, and can communicate with the taxi company server 7 through the wireless public network 8. 11 denotes a wireless access point connected to the local portal server 10 inside-the-car. When the taxi user 1 boards the taxi 9, the wireless access point 11 can communicate with the browser phone 2 by short-distance wireless communications, such as Bluetooth and IEEE 802.11. In addition, a combination of the local portal server 11 inside-the-car and the wireless access point 12 corresponds to an example of a car-installed communications apparatus. 12 and 13 are taxis in line waiting for customers.

Though only one wireless local access point 3 is illustrated in Fig. 1 because of drawing conditions, it is supposed that wireless local access points are located in a plurality of taxi stands or other places. Moreover, though only one taxi company server 7 is illustrated, it is supposed that each of a plurality of taxi companies keeps its own taxi company server. Moreover, each taxi always transmits information, such as a position and a state of the taxi, from the local portal server 10 inside-the-car, and the taxi company server 7 grasps the state of each taxi based on the information transmitted from each taxi.

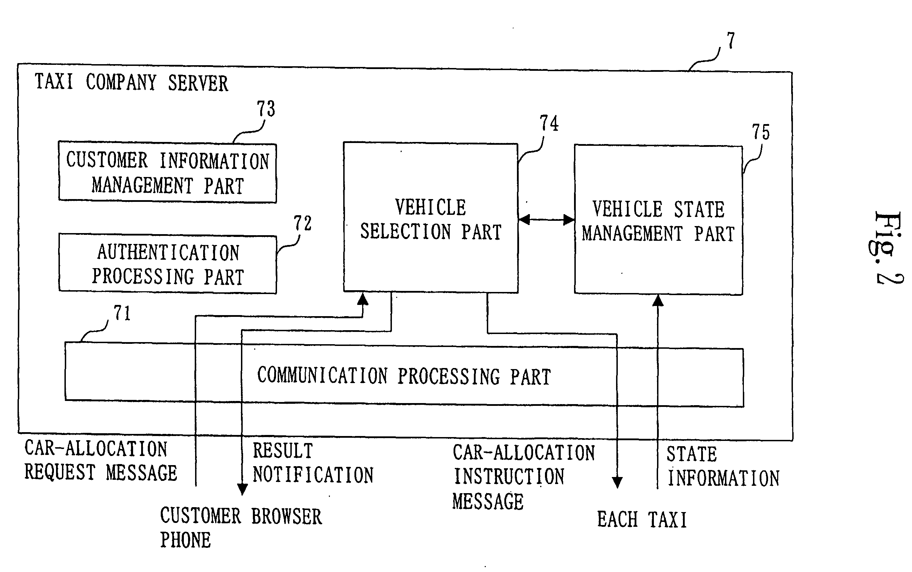

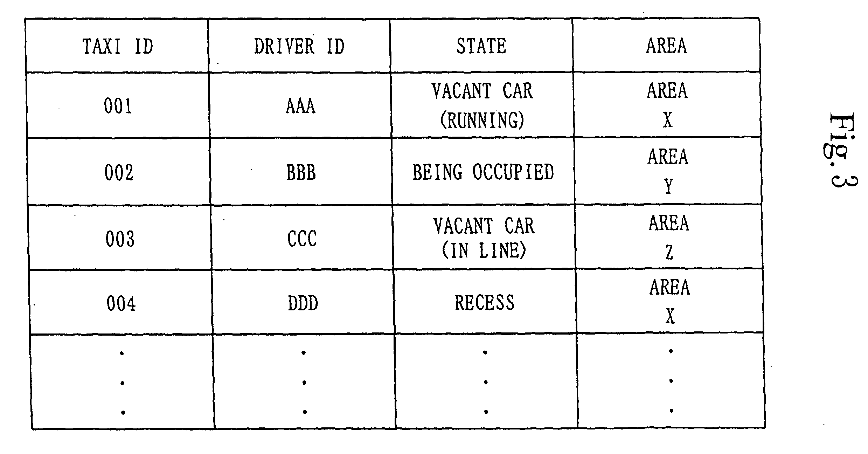

Fig. 2 is a functional block diagram showing an example of an internal structure of the taxi company server 7. In Fig. 2, 71 denotes a communication processing part which performs various communication processing. 72 denotes an authentication processing part which performs authentication processing concerning a taxi user who requested car allocation. 73 denotes a customer information management part which manages attribute information etc. of taxi users. 74 denotes a vehicle selection part which selects a taxi to be allocated to the taxi user who requested the car allocation. 75 denotes a vehicle state management part which manages vehicle states concerning a plurality of taxis. The taxi company server 7 always collects information of a position, a state, etc. of each taxi through the wireless public network 8, and updates it by the vehicle state management part 75. The vehicle state management part 75 has a vehicle state table as shown in Fig. 3, and rewrites the contents of the vehicle state table whenever a vehicle state of each taxi is updated.

Fig. 3 shows an example of the vehicle state table. In the example of Fig. 3, a driver ID, a state of a taxi, and an area where the taxi exists are managed per taxi ID.

Now, operations will be explained. At a taxi stand, the taxi user 1 accesses the local portal server 4 via the wireless local access point 3, by operating his/her own browser phone 2. At the local portal server 4, it is possible to connect to the taxi company server 7 of more than one taxi company. The taxi user transmits a message for selecting a specific taxi company from a plurality of taxi companies, from the browser phone 2 to the local portal server 4 via the wireless local access point 3. Then, at the local portal server 4, it is connected to the taxi company server 7 of a taxi company selected by the taxi user 1.

Communications between the browser phone 2 and the wireless local access point is performed by using short-distance wireless communications such as Bluetooth and IEEE802.11 for which a communication fee is not charged.

At the website of the taxi company server 7 of the selected taxi company, the taxi user 1 executes a client authentication procedure by using the browser phone 2. This authentication procedure is performed by the authentication processing part 72 of the taxi company server 7, with using information in the customer information management part 73. When the authentication procedure is finished, the taxi user 1 transmits a car-allocation request message from the browser phone 2. The car-allocation request message is transmitted, for example, by inputting predetermined information into the contents of "taxi call" prepared on the website of the taxi company server 7.

In this case, the taxi user 1 can perform the car-allocation request with specifying a specific driver or a plurality of specific drivers in the selected taxi company, or can perform the car-allocation request without specifying a specific driver. In the case of specifying a specific driver, a driver ID (driver identification information) of the specified driver is included in the car-allocation request message to be transmitted. For example, it is acceptable to install a specified JAVA (registered trademark) applet in the browser phone 2 in advance and to transmit a driver ID of a driver who has been registered in the browser phone 2 to a website, with cooperating with a program on the website.

Next, processing performed by the taxi company server 7 at the time of receiving the car-allocation request message from the taxi user 1 will be explained. Receiving the car-allocation request message transmitted from the browser phone 2 of the taxi user 1, the vehicle selection part 74 analyzes the car-allocation request message, and judges from which wireless local access point the car-allocation request message was transmitted. In addition, it is judged whether a specific driver's driver ID is included in the car-allocation request message or not.

Next, the vehicle selection part 74 selects a taxi to be allocated to the taxi user 1, with referring to the vehicle state table in the vehicle state management part 75. In the case that a driver's driver ID is not included in the car-allocation request message, for example, a taxi to be allocated is selected from vacant taxis being in the same area as the position of the wireless local access point (the place where the taxi user is staying). On the other hand, when a specific driver's driver ID is included in the car-allocation request message, the specified driver's taxi is selected. In the case that the specified driver's taxi is far away, or the specified driver's taxi is being occupied, for example, a taxi to be allocated is selected from the vacant taxis in the same area as the position of the wireless local access point (the place where the taxi user is staying).

When the selection of the taxi is finished, the vehicle selection part 74 generates a selection-result notification message which notifies a selection result, and transmits the selection-result notification message to the browser phone 2 of the taxi user 1 via the communication processing part 71. The selection-result notification message includes information for specifying a taxi, such as ID of the selected taxi.

Moreover, the vehicle selection part 74 generates a car-allocation instruction message which instructs to allocate a car to an allocation position of a wireless local access point (the place where the taxi user is staying), and transmits it to the local portal server 10 inside-the-car in the selected taxi via the communication processing part 71. The car-allocation instruction message includes information, such as a name of the taxi user 1, for specifying the taxi user 1.

When the car-allocation instruction message is transmitted, the local portal server 10 inside-the-car of the selected taxi 9 receives the car-allocation instruction message, and according to the car-allocation instruction message, the selected taxi 9 moves to the place where the taxi user is staying.

Thus, it is possible for the taxi user to simply and minutely select a desired taxi service without paying a communication fee. Besides, a taxi of a superior taxi company can expect effect of increasing a possibility of gaining a customer, compared with a taxi of other company.

In the example of Fig. 1, the taxi 9 can be allocated to the taxi user 1 who called the taxi, ahead of other company's taxis 12 and 13 waiting for customers.

Besides, a superior driver can receive a designation call and preferentially gain a customer .

Moreover, the local portal server 10 inside-the-car of the taxi 9 keeps a driver ID (its driver identification information) of the driver of the taxi 9. The taxi user 1 who boarded the taxi 9 can be connected to the local portal server 10 inside-the-car, through the wireless access point 11 installed in the taxi. This local portal server 10 inside-the-car transmits the driver ID of the taxi 9 to the browser phone 2 of the taxi user 1, by short-distance wireless communications. The browser phone 2 receives and stores the transmitted driver ID, and the taxi user 1 can utilize the stored driver ID at the next time of a driver designation call.

As stated above, in the case of satisfied with the service of the driver of the taxi which the taxi user utilized, the taxi user can easily designate the driver at the next time of using a taxi, by receiving and storing the driver's driver ID in the browser phone 2. Then, taxi user's convenience can be enhanced. Moreover, a driver side can preferentially gain a customer.

### Embodiment 2

A taxi selection boarding system (communications system) according to the present Embodiment will be explained hereafter.

A system structure of the taxi selection boarding system according to the present Embodiment is the same as that shown in Fig. 1. Moreover, an internal structure of the taxi company server 7 is the same as that shown in Fig. 2.

Now operations will be explained. Processing from selecting a taxi by the taxi company server 7 to transmitting a selection-result notification message to the taxi user 1 is the same as that of Embodiment 1.

The vehicle selection part 74 acquires attribute information of the taxi user 1 from the customer information management part 73, at the time of generating a car-allocation instruction message. The attribute information includes information, such as a sex, an age, an occupation and a hobby of the taxi user 1. Then, the vehicle selection part 74 includes the acquired attribute information of the taxi user 1 in the car-allocation instruction message, and transmits the car-allocation instruction message including the attribute information of the taxi user 1, to the selected taxi 9.

The local portal server 10 inside-the-car of the taxi 9 keeps various notice information, such as news information and advertising information. The taxi user 1 who boarded the taxi 9 can connect to the local portal server 10 inside-the-car, through the wireless access point 11 installed in the taxi. In this case, at the local portal server 10 inside-the-car, suitable news information and advertising information are selected based on the taxi user 1's attribute information included in the car-allocation instruction message. Then, the selected news information and advertising information are transmitted to the browser phone 2 of the taxi user 1 by short-distance wireless communications, and displayed in the browser phone 2.

Moreover, the local portal 10 inside-the-car can be connected to the Internet through the wireless public network 8. When there is a request transmitted from the browser phone 2 of the taxi user 1, a specific member can be provided with this service after client authentication. In the case of the taxi user being admitted to be the specific member by the client authentication, the local portal server 10 inside-the-car relays the Internet connection of the browser phone 2.

Moreover, the local portal 10 inside-the-car keeps questionnaire data for questionnaires, transmits the questionnaire data to the browser phone 2 from the wireless access point 11 at the time of the taxi user 1's boarding the taxi 9, receives a response to the questionnaire data from the browser phone 2 via the wireless access point 11, and transmits the received response to the questionnaire data to the taxi company server 7 through the wireless public network 8. In the taxi company, it is possible to analyze and survey responses to the questionnaire data transmitted from a plurality of taxis.

Thus, in the taxi selection boarding system according to the present Embodiment, notice information can be shown to a taxi user by local access in the taxi, and Internet access service can be provided in a predetermined case. Therefore, the service for a taxi user can be enhanced and differentiation of the service can be contrived.

Moreover, since advertising information can be shown to a taxi user at the time of local access in the taxi, cost of innovating the taxi selection boarding system can be easily compensated.

### INDUSTRIAL APPLICABILITY

According to the present invention, a mobile communications terminal apparatus transmits a car-allocation request message, by using short-distance wireless communications for which no communication fee is charged. Then, in order to allocate a car, a car-allocation management apparatus selects a suitable car based on the car-allocation request message and a placed position of a relay apparatus, and transmits a car-allocation instruction message to a car-installed communications apparatus of the selected car. Therefore, a user can call a car without paying a communication fee.

Moreover, according to the present invention, the mobile communications terminal apparatus can transmit a car-allocation request message addressed to a specific vehicle management apparatus in a plurality of vehicle management apparatuses, by using short-distance wireless communications. Therefore, a user can call a desired car without paying a communication fee.

Moreover, according to the present invention, the mobile communications terminal apparatus transmits a car-allocation request message including specific driver identification information, by using short-distance wireless communications, and the vehicle management apparatus allocates a car by selecting a car corresponding to the driver identification information included in the car-allocation request message. Therefore, a user can call a car of a desired driver without paying a communication fee.

Moreover, according to the present invention, each of the car-installed communications apparatuses keeps its driver identification information and transmits its driver identification information to a mobile communications terminal apparatus when the mobile communications terminal apparatus has moved to the car in which each of the car-installed communications apparatuses is installed. Therefore, a user can easily designate the driver at the next using time. Accordingly, user's convenience can be enhanced.

Moreover, a driver side can preferentially gain a user.

Moreover, according to the present invention, each car-installed communications apparatus transmits notice information to a mobile communications terminal apparatus or connects to the Internet, when the mobile communications terminal apparatus has moved to the car in which each car-installed communications apparatus is installed. Therefore, service for the user can be enhanced and differentiation of the service can be contrived.

Moreover, according to the present invention, each car-installed communications apparatus, when a mobile communications terminal apparatus has moved to a car in which each car-installed communications apparatus is installed, transmits questionnaire data to the mobile communications terminal apparatus, receives a response to the questionnaire data from the mobile communications terminal apparatus, and transmits the received response to the questionnaire data to the vehicle management apparatus. Therefore, survey based on the questionnaire can be efficiently performed.

## Claims

1. A communications system, comprising:
a mobile communications terminal apparatus to transmit a car-allocation request message which requests car allocation, by using short-distance wireless communications;
a plurality of relay apparatuses, each of which is located at a predetermined geographical position, to receive the car-allocation request message transmitted from the mobile communications terminal apparatus in a certain case, and to perform relay processing of the car-allocation request message received;
a plurality of car-installed communications apparatuses installed in a plurality of cars; and
a vehicle management apparatus to manage the plurality of cars by performing communications with the plurality of car-installed communications apparatuses, to receive the car-allocation request message relayed by one of the plurality of relay apparatuses, to detect a placed position of the one of the plurality of relay apparatuses, which relayed the car-allocation request message, to select a specific car, as a selected vehicle, from the plurality of cars based on the car-allocation request message and a detected placed position of the relay apparatus, and to transmit a car-allocation instruction message that directs to allocate a car to the detected placed position of the relay apparatus, to a car-installed communications apparatus installed in the selected vehicle.

2. The communications system of claim 1,
wherein the communications system includes a plurality of vehicle management apparatuses, and the mobile communications terminal apparatus selects a specific vehicle management apparatus from the plurality of vehicle management apparatuses and transmits a car-allocation request message addressed to a selected vehicle management apparatus.

3. The communications system of claim 1,
wherein the vehicle management apparatus sets driver identification information for identifying a driver of each car in the plurality of cars,
the mobile communications terminal apparatus transmits a car-allocation request message including specific driver identification information, and
the vehicle management apparatus, when receiving the car-allocation request message including the specific driver identification information from one of the relay apparatuses, selects a car corresponding to the driver identification information included in the car-allocation request message as the selected vehicle.

4. A car-allocation system of claim 1,
wherein the mobile communications terminal transmits the car-allocation request message, by using short-distance wireless communications for which a fee is not charged.

5. A communications system, comprising:
a plurality of relay apparatuses, each of which is located at a predetermined geographical position, to receive a car-allocation request message transmitted from a mobile communications terminal apparatus, in a certain case, and to perform relay processing of the car-allocation request message received;
a plurality of car-installed communications apparatuses installed in a plurality of cars; and
a vehicle management apparatus to manage the plurality of cars by performing communications with the plurality of car-installed communications apparatuses, to receive the car-allocation request message relayed by one of the plurality of relay apparatuses, to detect a placed position of the one of the plurality of relay apparatuses which relayed the car-allocation request message, to select a specific car, as a selected vehicle, from the plurality of cars, based on the car-allocation request message and a detected placed position of the relay apparatus, and to transmit a car-allocation instruction message that directs to allocate a car to the detected placed position of the relay apparatus, to a car-installed communications apparatus installed in the selected vehicle.

6. The communications system of claim 5,
wherein the vehicle management apparatus sets driver identification information for identifying a driver of each car in the plurality of cars, and when receiving a car-allocation request message including specific driver identification information from one of the relay apparatuses, selects a car corresponding to the driver identification information included in the car-allocation request message as the selected vehicle.

7. The communications system of claim 5,
wherein each of the plurality of car-installed communications apparatuses keeps identification information of a driver of a car in which each of the car-installed communications apparatuses is installed, as its driver identification information, and when the mobile communications terminal apparatus has moved to the car in which each of the car-installed communications apparatuses is installed, transmits its driver identification information to the mobile communications terminal apparatus.

8. The communications system of claim 5,
wherein each of the car-installed communications apparatuses keeps notice information predetermined, and when the mobile communications terminal apparatus has moved to the car in which each of the car-installed communications apparatuses is installed, transmits the notice information to the mobile communications terminal apparatus.

9. The communications system of claim 8,
wherein each of the car-installed communications apparatuses keeps advertising information as the notice information, and when the mobile communications terminal apparatus has moved to the car in which each of the car-installed communications apparatuses is installed, transmits the advertising information to the mobile communications terminal apparatus.

10. The communications system of claim 8,
wherein the vehicle management apparatus keeps user attribute information which shows an attribute of a user of the mobile communications terminal apparatus, and transmits a car-allocation instruction message including the user attribute information to a car-installed communications apparatus installed in the selected vehicle, and
each of the car-installed communications apparatuses keeps a plurality of notice information, and when receiving the car-allocation instruction message including the user attribute information from the vehicle management apparatus, selects at least one of notice information from the plurality of notice information based on the user attribute information, and transmits a selected notice information to the mobile communications terminal.

11. The communications system of claim 5,
wherein each of the car-installed communications apparatuses, when the mobile communications terminal apparatus has moved to the car in which each of the car-installed communications apparatuses is installed, relays connection of the mobile communications terminal apparatus to the Internet.

12. The communications system of claim 5,
wherein each of the car-installed communications apparatuses keeps questionnaire data for a questionnaire, and when the mobile communications terminal apparatus has moved to the car in which each of the car-installed communications apparatuses is installed, transmits the questionnaire data to the mobile communications terminal apparatus, receives a response to the questionnaire data from the mobile communications terminal apparatus, and transmits a received response to the questionnaire data to the vehicle management apparatus.
